# EUROPEAN PATENT SPECIFICATION

(11) **EP 4 454 301 B1**
(45) Date of publication and mention of the grant of the patent: **18.11.2026**
(21) Application number: 22844288.5
(22) Date of filing: 22.12.2022
(51) Int. Cl.: H04W 4/02, G01S 5/02, H04W 4/80, H04W 4/33, H04L 61/103, H04L 61/5007, H04W 84/18

(54) **BLUETOOTH COMMUNICATION SYSTEM ENABLING BRIDGING TO IP NETWORKS WITH INDOOR LOCALIZATION CAPABILITY WITHOUT CALIBRATION**
BLUETOOTH-KOMMUNIKATIONSSYSTEM ZUR VERBINDUNG VON IP-NETZWERKEN MIT INNENLOKALISIERUNGSFÄHIGKEIT OHNE KALIBRIERUNG
SYSTÈME DE COMMUNICATION BLUETOOTH PERMETTANT UN PONTAGE VERS DES RÉSEAUX IP AVEC UNE CAPACITÉ DE LOCALISATION INTÉRIEURE SANS ÉTALONNAGE

(30) Priority: 22.12.2021 IT 202100032177
(43) Date of publication of application: 30.10.2024
(73) Proprietor: Universita' Degli Studi di Firenze, 50121 Firenze (IT)
(72) Inventor: PASSAFIUME, Marco, 50131 FIRENZE (IT); CIERVO, Edoardo, 51015 MONSUMMANO TERME (Pistoia) (IT); COLLODI, Giovanni, 50142 FIRENZE (IT); CIDRONALI, Alessandro, 50018 SCANDICCI (Firenze) (IT)
(74) Representative: Cristinelli, Luca
(86) International application number: PCT/IB2022/062665
(87) International publication number: WO 2023/119214

(56) References cited:
- EP-A2- 1 420 550
- US-A1- 2008 287 142

## Description

### Technical field

The present invention generally lies within the field of communication systems and communication messages. Specifically, the invention relates to communication systems that may be used for communication from a user device facing a communication network according to a Bluetooth protocol including a Bluetooth localization infrastructure arranged in a confined environment to a recipient device facing a communication network according to an Internet protocol, and/or for communication from a recipient device facing a communication network according to an Internet protocol to a user device facing a communication network according to a Bluetooth protocol including a Bluetooth localization infrastructure arranged in a confined environment.

The disclosure further relates to an advanced request communication message, for a communication from a user device facing a communication network according to a Bluetooth protocol including a Bluetooth localization infrastructure arranged in a confined environment to a recipient device facing a communication network according to an Internet protocol, and an advanced response communication message, for a communication from a recipient device facing a communication network according to an Internet protocol to a user device facing a communication network according to a Bluetooth protocol including a Bluetooth localization infrastructure arranged in a confined environment.

### Prior art

In recent years, considerable progress has been made in the field of technologies for detecting the positioning of users in a confined environment. Nowadays there is a growing interest in location-based services.

In the known prior art there are solutions that propose the use of localization systems based on Bluetooth beaconing. These solutions based on Bluetooth beaconing make it possible to obtain good localization precision but do not contemplate the possibility of establishing a bi-directional communication channel between network nodes.

In the known prior art other solutions also exist that are based on Wi-Fi networks. These solutions make it possible to establish a bi-directional communication channel between network nodes, but introduce scarce results in terms of localization precision.

Nowadays, therefore, there is no solution that makes it possible to establish a bi-directional communication channel between network nodes and at the same time obtain good localization accuracy.

For example, in the known prior art:
- US10571547B2 describes a method and system for indoor localization using beacons.
- US2020259570A1 describes indoor localization using beacon technology based on signal strength distribution and deep learning techniques;
- US 10684349B2 describes an indoor localization method;
- US9204259B2 describes internal localization of mobile devices;
- US10794983B1 describes localization of devices at an arrival angle by means of machine learning;
- EP1420550A2 relates to techniques for providing customized content to wireless communications devices across a communications network;
- US 2008/287142 A1 relates to a method and apparatus for providing location specific content to users.

However, even in light of the above documents from the prior art, the aforementioned disadvantages of the known art remain unresolved.

### Summary of the invention

One object of the present invention is to provide a solution that combines high-precision localization capabilities with bi-directional contextualized communications capabilities using a localized user device, within a unique and/or pre-existing network infrastructure. The aforementioned and other objects and advantages are achieved, according to the respective aspects of the invention, by a communication system having the features defined in claim 1, a communication system having the features defined in claim 7, a communication system having the features defined in claim 8. Preferred embodiments of the invention are defined in the dependent claims, the content of which is to be understood as an integral part of the present description.

### Brief description of the drawings

The functional and structural features of some preferred embodiments of communication systems according to the invention will now be described. Reference is made to the accompanying drawings, in which:
- Figure 1 shows an exemplary embodiment of a communication system according to the invention;
- Figure 2 shows a block diagram wherein the passage of the request message and the advanced request message between the various components of the communication system may be observed;
- Figure 3 shows a block diagram wherein the passage of the response message and the advanced response message between the various components of the communication system may be observed;
- Figure 4 shows an example of how a global coverage area of the localization infrastructure may automatically re-adapt when Bluetooth nodes are added.

### Detailed description

Before explaining, in detail, a plurality of embodiments of the invention, it should be clarified that the invention is not limited in the application thereof to the design details and configuration of the components presented within the following description or shown in the drawings. The invention may assume other embodiments and be implemented or constructed in practice in different ways. It should also be understood that the phraseology and terminology have a descriptive purpose and should not be construed as limiting. The use of "include" and "comprise" and the variations thereof are intended to cover the elements set out below and the equivalents thereof, as well as additional elements and the equivalents thereof.

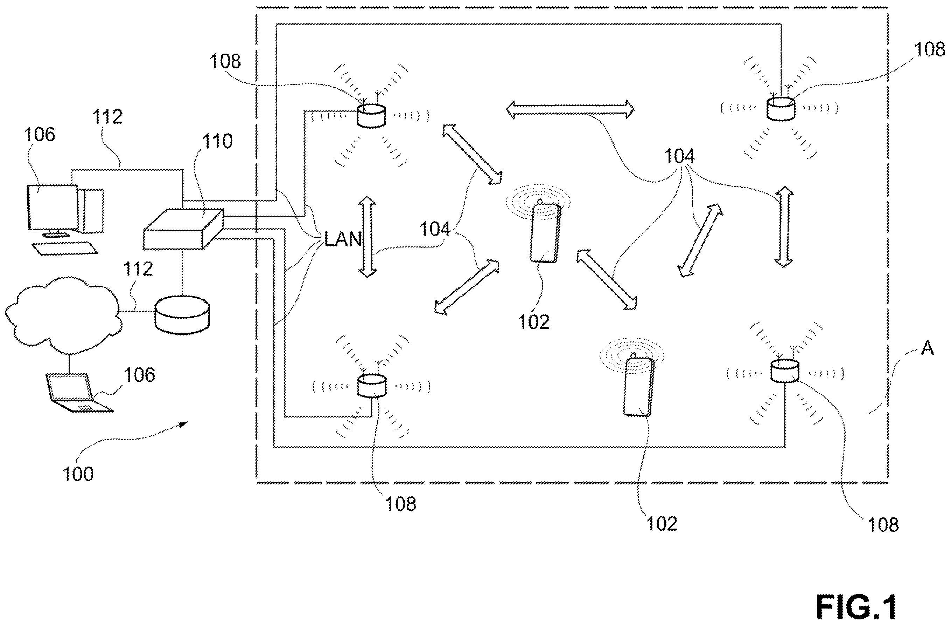

In the following, referring to Figure 1 as an example, a first embodiment of a communication system is described.

In this embodiment, the communication system 100 is intended for communication from a user device 102 facing a communication network according to a Bluetooth protocol 104 including a Bluetooth localization infrastructure arranged in a confined environment A to a recipient device 106 facing a communication network according to an Internet protocol 108. This communication system 100 includes a software application, or software library, arranged for being installed in the user device 102 having a Bluetooth address identifier of the user device and configured to generate a request message according to the Bluetooth protocol including at least a first data portion indicative of an internet protocol address of the recipient device and a second data portion including the Bluetooth address identifier of the user device.

The communication system 100 also includes a plurality of Bluetooth nodes 108 belonging to the Bluetooth localization infrastructure and arranged to be installed in respective positions of the confined environment A. Each of the Bluetooth nodes 108 has its own coverage area C of the confined environment. Each Bluetooth 108 node is also arranged to receive the request message transmitted by said user device 102 when it is in the relevant coverage area.

Furthermore, the communication system 100 includes an access apparatus 110, arranged to allow access to a communication network according to the Internet protocol 112 to which the Bluetooth nodes 108 of the Bluetooth localization infrastructure are connected via a local area communication network LAN.

For example, the local area communication network LAN may be a wired local area network or a wireless network.

Each Bluetooth node 108, when it receives the request message, is arranged to forward the request message to the access apparatus 110 through the local area communication network LAN.

The access apparatus 110 is also arranged to generate an advanced request message according to the internet protocol including a first data portion indicative of the internet protocol address of the recipient device included in the received request message, a second data portion indicative of the Bluetooth address identifier of the user device included in the received request message, and a third data portion of data indicative of the position of the user device 102 with respect to the Bluetooth localization infrastructure.

In addition, the access apparatus 110 is arranged to transmit, through the communication network according to the Internet protocol, the advanced request message to the recipient device 106.

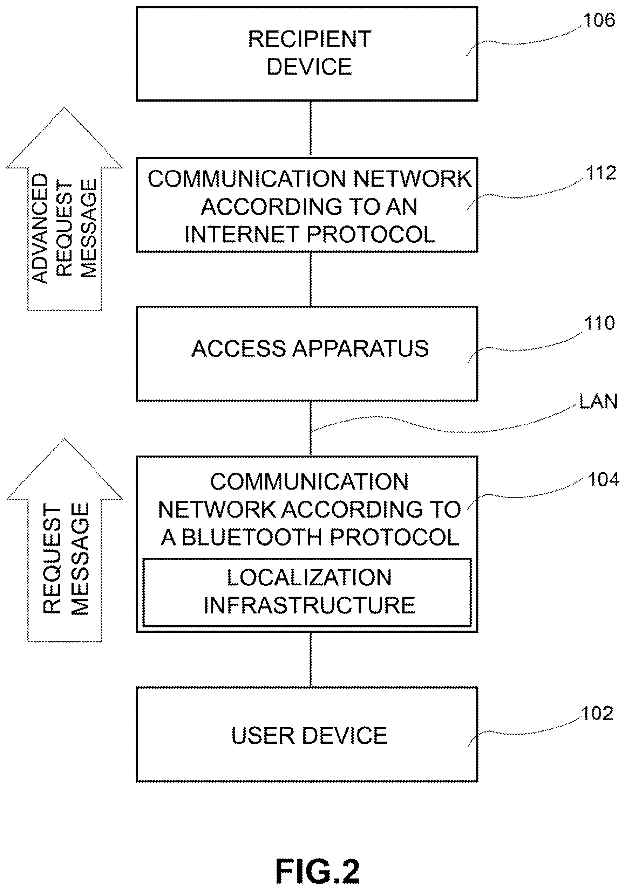

In Figure 2, it is possible to observe a summary block diagram that shows the passage of the request message and the advanced request message between the various components of the communication system described above.

Preferably, the access apparatus 110 may include a user device 102 position determination means arranged for determining that the position of the user device 102 with respect to the Bluetooth localization infrastructure corresponds to the predetermined position in the confined environment of the Bluetooth node from which the request message according to the Bluetooth protocol was transmitted.

Preferably, when the user device position determination means receives a plurality of request messages whose first data portions and second data portions are identical, the user device position determination means is arranged to determine that the position of the user device with respect to the Bluetooth localization infrastructure corresponds to the predetermined position in the confined environment of the Bluetooth node which transmitted first this request message according to the Bluetooth protocol.

The fact that it is possible to determine the position of the user device with respect to the Bluetooth localization infrastructure based on the predetermined position in the confined environment of the Bluetooth node which transmitted first this request message according to the Bluetooth protocol optimizes communication management and decreases communication traffic.

Preferably, the access apparatus 110 may include an associative table in which the association between the Bluetooth address identifier of the user device and the second data portion of the advanced request message according to the internet protocol, indicative of the Bluetooth address identifier of the user device, is reported.

Preferably, the second data portion of the advanced request message according to the internet protocol, indicative of the Bluetooth address identifier of the user device, may be or may include an assigned IP address associated with the Bluetooth address identifier of the user device.

For example, the access apparatus 110 may be arranged to, at the software level, maintain the associative table between the assigned IP addresses and the respective Bluetooth address identifiers of the connected user devices, so as to perform a conversion from an address according to the Internet protocol to a Bluetooth address identifier of the user device according to a Bluetooth address, and vice versa. In this way, the user device may be identified within the request by an Internet protocol address and not by a Bluetooth address. Preferably, said assigned IP address associated with the Bluetooth address identifier of the user device may be assigned by the Bluetooth localization infrastructure, for example by an element belonging to said Bluetooth localization infrastructure.

In a further embodiment of the invention, the communication system 100 is intended for communication from a recipient device 106 facing a communication network according to an Internet protocol 112 to a user device 102 facing a communication network according to a Bluetooth protocol 104 including a Bluetooth localization infrastructure arranged in a confined environment A.

In this embodiment, the communication system again comprises an access apparatus 110 arranged to allow access to the communication network according to the Internet protocol and to which a plurality of Bluetooth nodes 108 of said Bluetooth localization infrastructure is connected via a local area communication network LAN. Again, the Bluetooth nodes 108 of the plurality of Bluetooth nodes are arranged to be installed in respective positions of the confined environment. Each of the Bluetooth nodes has its own coverage area of the confined environment.

Also in this embodiment, for example, the local area communication network LAN may be a wired local area network or a wireless network.

The access apparatus 110 is arranged to receive from the recipient device 106, through a communication network according to the Internet protocol, a response message according to an Internet protocol including a first data portion indicative of an Internet protocol address of the recipient device and a second data portion indicative of a Bluetooth address identifier of the user device.

The access apparatus 110 is also arranged to generate an advanced response message according to the Bluetooth protocol including a first data portion indicative of the internet protocol address of the recipient device included in the received response message, a second data portion indicative of the Bluetooth address identifier of the user device included in the received request message, and a third data portion indicative of the position of the user device with respect to the Bluetooth location infrastructure.

Furthermore, the access apparatus 110 or a supervisor Bluetooth node of said Bluetooth location infrastructure is arranged to determine the Bluetooth node of the Bluetooth localization infrastructure closest to the user device 102.

The access apparatus 110 is arranged to transmit, through said local area communication network (LAN), the advanced response message to the Bluetooth node of the Bluetooth localization infrastructure closest to the user device.

Finally, the Bluetooth node that receives the advanced response message is arranged to forward said advanced response message to the user device 102 in its coverage area.

Hereinafter a further embodiment of a communication system 100 intended for communication from a recipient device 106 facing a communication network according to an Internet protocol 112 to a user device 102 facing a communication network according to a Bluetooth protocol 104 including a Bluetooth localization infrastructure arranged in a confined environment A is described.

In this embodiment, the communication system 100 again comprises an access apparatus 110 arranged to allow access to the communication network according to the Internet protocol and to which a plurality of Bluetooth nodes 108 of said Bluetooth localization infrastructure is connected via a local area communication network LAN. The Bluetooth nodes 108 of the plurality of Bluetooth nodes are arranged to be installed in respective positions of the confined environment A. In addition, each of the Bluetooth nodes 108 has its own coverage area of the confined environment.

The access apparatus 110 is again arranged to receive from the recipient device 106, through said communication network according to an Internet protocol 112, a response message according to an Internet protocol including a first data portion indicative of an Internet protocol address of the recipient device and a second data portion indicative of a Bluetooth address identifier of the user device. The access apparatus 110 is further arranged to generate an advanced response message according to the Bluetooth protocol including a first data portion indicative of the internet protocol address of the recipient device included in the received response message, a second data portion indicative of the Bluetooth address identifier of the user device included in the received request message, and a third data portion indicative of the position of the user device with respect to the Bluetooth location infrastructure.

Unlike the previous embodiment, the access apparatus 110 is arranged to transmit the advanced response message to the plurality of Bluetooth nodes 108 of the Bluetooth localization infrastructure, through said local area communication network LAN.

In such a case, each Bluetooth node 108 is arranged to compare the position of the user device 102 with respect to the Bluetooth location infrastructure indicated by the third data portion of the advanced response message with its predetermined position in the Bluetooth localization infrastructure. When a Bluetooth node determines that its predetermined position in the localization infrastructure corresponds to the position of the user device with respect to the Bluetooth location infrastructure indicated by the third data portion of the advanced response message, said Bluetooth node is arranged to forward said advanced response message to the user device 102 in its coverage area.

Preferably, a software application, or software library, arranged to compare the Bluetooth address identifier of the user device indicated by the second data portion indicative of the Bluetooth address identifier of the user device included in the advanced response message received with the Bluetooth address identifier of the user device may be installed on the user device 102. When the comparison shows that the Bluetooth address identifier of the user device does not correspond with the Bluetooth address identifier of the user device indicated by the second data portion indicative of the Bluetooth address identifier of the user device included in the received advanced response message, the software application, or the software library, may be arranged to discard the received advanced response message.

Preferably, for both previously described embodiments, the access apparatus 110 may include an associative table in which the association between the Bluetooth address identifier of the user device and the second data portion indicative of a Bluetooth address identifier of the user device of the response message according to an Internet protocol is reported.

Preferably, the second data portion of the response message according to the internet protocol, indicative of the Bluetooth address identifier of the user device, may be or may include an assigned IP address associated with the Bluetooth address identifier of the user device.

For example, as previously described, the access apparatus 110 may be arranged to, at the software level, maintain the associative table between the assigned IP addresses and the respective Bluetooth address identifiers of the connected user devices, so as to perform a conversion from an address according to the Internet protocol to a Bluetooth address identifier of the user device according to a Bluetooth address, and vice versa. In this way, in the response, the user device may be identified via a Bluetooth address and not via an Internet protocol address.

Preferably, the assigned IP address associated with the Bluetooth address identifier of the user device may be assigned by the Bluetooth localization infrastructure, for example by an element belonging to said Bluetooth localization infrastructure.

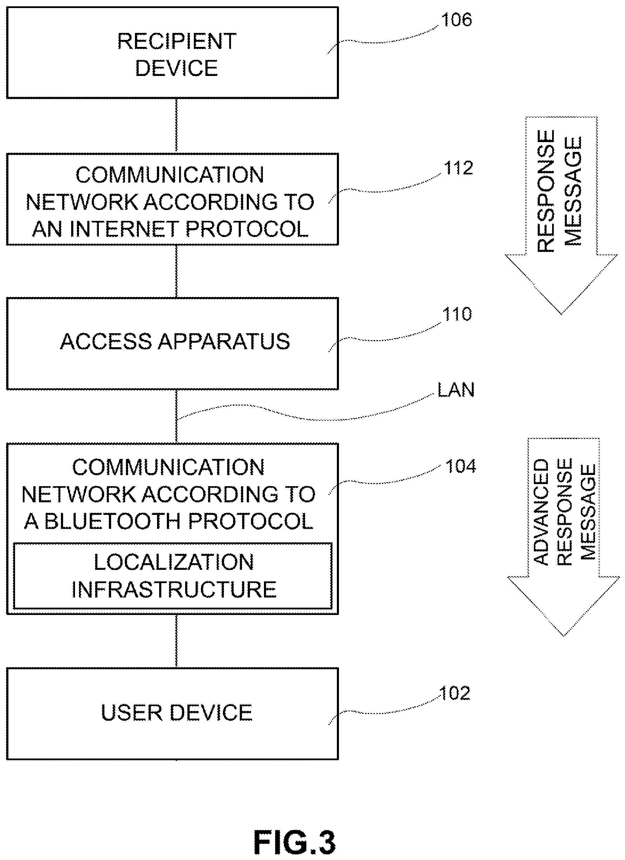

Figure 3 shows an exemplary block diagram showing the passage of the response message and the advanced response message between the various components of the communication system according to the embodiments described herein and relating to communications from the recipient device 106 facing the communication network according to the Internet protocol 112 to the user device 102 facing the communication network according to the Bluetooth protocol 104.

Preferably, each Bluetooth node may include a Bluetooth beacon.

Preferably, the access apparatus 110 may be a network switch.

Preferably, the access apparatus 110 may be connected to said communication network according to the Internet protocol 112 by means of a router.

For example, the router may be a wired communication or wireless communication router.

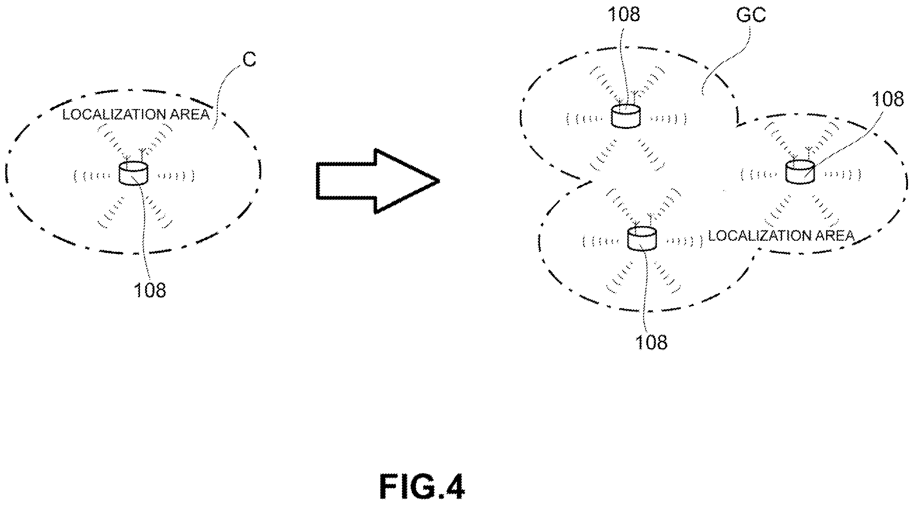

Advantageously, according to the present invention, whenever a Bluetooth node is removed or added in the Bluetooth localization infrastructure, it is not necessary to perform a training step. Thus, the communication system of the present invention is advantageously scalable. An example of how the global coverage area GC of the localization infrastructure automatically extends when Bluetooth nodes 108 are added is shown in Figure 4.

For example, in the present invention, a confined space may be any environment within a building or structure (indoor) or any open confined space (outdoor).

For example, in the present invention, a communication network according to the Internet protocol 112 may be any internet network (world wide web) or any local network that is based on communications via IP addresses. A communication network according to the Bluetooth protocol may be any Bluetooth network.

The Bluetooth localization infrastructure may be any known infrastructure used in the localization industry that is capable of providing/determining user location information.

For example, in the present invention, a recipient device facing a communication network according to an Internet protocol may be a remote server/database of an external service connected to such a communication network according to an Internet protocol, or a server/database/device connected locally to such a communication network according to an **In**ternet protocol.

For example, in the present invention, the various software applications may be developed according to any known programming language, e.g. Java, C, C++, etc.... By way of example, the various software applications may be downloaded and installed on the user device from a digital application market.

A further aspect relates to an advanced request communication message, for communication from a user device 102 facing a communication network according to a Bluetooth protocol 104 including a Bluetooth localization infrastructure arranged in a confined environment A to a recipient device 106 facing a communication network according to an Internet protocol 108, including at least:
- a first data portion indicative of an internet protocol address of the recipient device;
- a second data portion indicative of a Bluetooth address identifier of the user device;
- a third data portion indicative of the position of the user device 102 with respect to the Bluetooth location infrastructure.

Preferably, the advanced request communication message may be a message according to the internet protocol.

For example, the message payload may correspond to a payload of an IP packet as it would be if sent from a source device interfaced to the communication network according to the IP internet protocol directly to the destination device identified by an address according to the IP internet protocol, having however the latter interfaced to the network via Bluetooth infrastructure.

A still further aspect relates to an advanced response communication message, for a communication from a recipient device 106 facing a communication network according to an Internet protocol 112 to a user device 102 facing a communication network according to a Bluetooth protocol 104 including a Bluetooth localization infrastructure arranged in a confined environment A, including at least:
- a first data portion indicative of an internet protocol address of the recipient device;
- a second data portion including a Bluetooth address identifier of the user device;
- a third data portion indicative of the position of the user device with respect to the Bluetooth location infrastructure.

Preferably, the advanced request communication message may be a message according to the Bluetooth protocol.

The advantage gained is therefore to have provided solutions that make it possible to establish a bi-directional communication channel between the nodes of the network, insofar as some are connected via the Internet protocol and others are connected via the Bluetooth protocol, and at the same time to obtain good localization accuracy.

Various aspects and embodiments of communication systems according to the invention have been described. It is understood that each embodiment may be combined with any other embodiment. Moreover, the invention is not limited to the embodiments described, but may be varied within the scope defined by the appended claims.

## Claims

1. Communication system (100), for a communication from a user device (102) facing a communication network according to a Bluetooth protocol (104) including a Bluetooth localization infrastructure arranged in a confined environment (A) to a recipient device (106) facing a communication network according to an Internet protocol (108), comprising:
- a software application or library arranged to be installed in the user device (102) having a Bluetooth address identifier of the user device and configured to generate a request message according to the Bluetooth protocol including at least a first data portion indicative of an internet protocol address of the recipient device and a second data portion including the Bluetooth address identifier of the user device;
- a plurality of Bluetooth nodes (108) belonging to the Bluetooth localization infrastructure and arranged to be installed in respective positions of the confined environment (A), each of the Bluetooth nodes (108) having its own coverage area of the confined environment; wherein each Bluetooth node (108) is arranged to receive the request message transmitted by said user device (102) when it is in the relevant coverage area;
- an access apparatus (110) arranged to allow access to a communication network according to the Internet protocol (112) and to which the Bluetooth nodes (108) of said Bluetooth localization infrastructure are connected via a local area communication network (LAN);
wherein each Bluetooth node (108), when it receives the request message, is arranged to forward the request message to said access apparatus (110) through said local area communication network (LAN);
said access apparatus (110) being arranged to generate an advanced request message according to the internet protocol including a first data portion indicative of the internet protocol address of the recipient device included in the received request message, a second data portion indicative of the Bluetooth address identifier of the user device included in the received request message, and a third portion of data indicative of the position of the user device (102) with respect to the Bluetooth localization infrastructure;
said access apparatus (110) being arranged to transmit, through said communication network according to the Internet protocol, the advanced request message to the recipient device.

2. Communication system (100) according to claim 1, wherein said access apparatus (110) includes a user device (102) position determination means arranged for determining that the position of the user device (102) with respect to the Bluetooth location infrastructure corresponds to the predetermined position in the confined environment of the Bluetooth node from which the request message according to the Bluetooth protocol was transmitted.

3. Communication system (100) according to claim 1 or 2, wherein when said user device position determination means receives a plurality of request messages whose first data portions and second data portions are identical, the user device position determination means is arranged to determine that the position of the user device with respect to the Bluetooth localization infrastructure corresponds to the predetermined position in the confined environment of the Bluetooth node which transmitted first this request message according to the Bluetooth protocol.

4. Communication system (100) according to any one of the preceding claims, wherein said access apparatus (110) includes an associative table in which the association between the Bluetooth address identifier of the user device and the second data portion of the advanced request message according to the internet protocol, indicative of the Bluetooth address identifier of the user device, is reported.

5. Communication system (100) according to claim 4, wherein said second data portion of the advanced request message according to the internet protocol, indicative of the Bluetooth address identifier of the user device, is or includes an assigned IP address associated with the Bluetooth address identifier of the user device.

6. Communication system (100) according to claim 5, wherein said assigned IP address associated with the Bluetooth address identifier of the user device is assigned by the Bluetooth localization infrastructure.

7. Communication system (100), for a communication from a recipient device (106) facing a communication network according to an Internet protocol (112) to a user device (102) facing a communication network according to a Bluetooth protocol (104) including a Bluetooth localization infrastructure arranged in a confined environment (A), comprising:
- an access apparatus (110) arranged to allow access to the communication network according to the Internet protocol and to which a plurality of Bluetooth nodes (108) of said Bluetooth localization infrastructure are connected via a local area communication network (LAN), wherein the Bluetooth nodes (108) of said plurality of Bluetooth nodes are arranged to be installed in respective positions of the confined environment;
each of the Bluetooth nodes having its own coverage area of the confined environment;
said access apparatus (110) being arranged to receive from the recipient device, through a communication network according to the internet protocol, a response message according to internet protocol including a first data portion indicative of an internet protocol address of the recipient device and a second data portion indicative of a Bluetooth address identifier of the user device;
said access apparatus (110) being arranged to generate an advanced response message according to the Bluetooth protocol including a first data portion indicative of the internet protocol address of the recipient device included in the received response message, a second data portion including the Bluetooth address identifier of the user device indicated in the received response message, and a third data portion indicative of the position of the user device with respect to the Bluetooth location infrastructure;
said access apparatus (110) or a supervisor Bluetooth node of said Bluetooth location infrastructure being arranged to determine the Bluetooth node of the Bluetooth localization infrastructure closest to the user device (102);
wherein said access apparatus (110) is arranged to transmit, through said local area communication network (LAN), the advanced response message to the Bluetooth node of the Bluetooth localization infrastructure closest to the user device;
wherein the Bluetooth node that receives the advanced response message is arranged to forward said advanced response message to the user device (102) within its coverage area.

8. Communication system (100), for a communication from a recipient device (106) facing a communication network according to an Internet protocol (112) to a user device (102) facing a communication network according to a Bluetooth protocol (104) including a Bluetooth localization infrastructure arranged in a confined environment, comprising:
- an access apparatus (110) arranged to allow access to the communication network according to the Internet protocol (112) and to which a plurality of Bluetooth nodes (108) of said Bluetooth localization infrastructure are connected via a local area communication network (LAN), wherein the Bluetooth nodes (108) of said plurality of Bluetooth nodes are arranged to be installed in respective positions in the confined environment (A);
each of the Bluetooth nodes (108) having its own coverage area of the confined environment;
said access apparatus (110) being arranged to receive from the recipient device (106), through said communication network according to the Internet protocol (112), a response message according to Internet protocol including a first portion of data indicative of an internet protocol address of the recipient device and a second portion of data indicative of a Bluetooth address identifier of the user device;
said access apparatus (110) being arranged to generate an advanced response message according to the Bluetooth protocol including a first data portion indicative of the internet protocol address of the recipient device included in the received response message, a second data portion including the Bluetooth address identifier of the user device indicated in the received response message, and a third data portion indicative of the position of the user device with respect to the Bluetooth location infrastructure;
said access apparatus (110) being arranged to transmit, through said local area communication network (LAN), the advanced response message to the plurality of Bluetooth nodes (108) of the Bluetooth localization infrastructure;
wherein each Bluetooth node (108) is arranged to compare the position of the user device (102) with respect to the Bluetooth location infrastructure indicated by the third data portion of the advanced response message with its predetermined position in the Bluetooth localization infrastructure; when a Bluetooth node determines that its predetermined position in the localization infrastructure corresponds to the position of the user device with respect to the Bluetooth location infrastructure indicated by the third data portion of the advanced response message, said Bluetooth node is arranged to forward said advanced response message to the user device (102) within its coverage area.

9. Communication system (100) according to claim 8, wherein in said user device (102) is installed a software application or library arranged to compare the Bluetooth address identifier of the user device indicated by the second data portion indicative of the Bluetooth address identifier of the user device included in the received advanced response message with the Bluetooth address identifier of the user device;
when the comparison shows that the Bluetooth address identifier of the user device does not correspond with the Bluetooth address identifier of the user device indicated by the second data portion indicative of the Bluetooth address identifier of the user device included in the received advanced response message, said software application is arranged to discard the received advanced response message.

10. Communication system (100) according to any one of claims 7 to 9, wherein said access apparatus (110) includes an associative table in which the association between the Bluetooth address identifier of the user device and the second data portion indicative of a Bluetooth address identifier of the user device of the response message according to an Internet protocol is reported.

11. Communication system (100) according to claim 10, wherein said second data portion of the response message according to the internet protocol, indicative of the Bluetooth address identifier of the user device, is or includes an assigned address IP associated with the Bluetooth address identifier of the user device.

12. Communication system (100) according to claim 11, wherein said assigned IP address associated with the Bluetooth address identifier of the user device is assigned by the Bluetooth localization infrastructure.

13. Communication system (100) according to any one of the preceding claims, wherein each Bluetooth node includes a Bluetooth beacon.

14. Communication system (100) according to any one of the preceding claims, wherein said access apparatus (110) is a network switch.

15. Communication system (100) according to any one of the preceding claims, wherein said access apparatus (110) is connected to said communication network according to the Internet protocol (112) by means of a router.

## Patentansprüche

1. Kommunikationssystem (100), für eine Kommunikation von einem Benutzergerät (102), das einem eine in einer begrenzten Umgebung (A) angeordnete Bluetooth-Lokalisierungsinfrastruktur enthaltenden Kommunikationsnetz gemäß einem Bluetooth-Protokoll (104) zugewandt ist, zu einem Empfängergerät (106), das einem Kommunikationsnetz gemäß einem Internetprotokoll (108) zugewandt ist, umfassend:
- eine Softwareanwendung oder Bibliothek, die eingerichtet ist, in dem Benutzergerät (102) installiert zu werden, eine Bluetooth-Adresskennung des Benutzergeräts aufweist und konfiguriert ist, eine Anforderungsnachricht gemäß dem Bluetooth-Protokoll zu erzeugen, die mindestens einen ersten Datenabschnitt, der eine Internetprotokolladresse des Empfängergeräts angibt, und einen zweiten Datenabschnitt enthält, der die Bluetooth-Adresskennung des Benutzergeräts enthält;
- eine Vielzahl von Bluetooth-Knoten (108), die zur Bluetooth-Lokalisierungsinfrastruktur gehören und eingerichtet sind, an jeweiligen Positionen der begrenzten Umgebung (A) installiert zu werden, wobei jeder der Bluetooth-Knoten (108) seinen eigenen Abdeckungsbereich der begrenzten Umgebung aufweist; wobei jeder Bluetooth-Knoten (108) eingerichtet ist, die Anforderungsnachricht zu empfangen, die von dem genannten Benutzergerät (102) übertragen wird, wenn es sich in dem betreffenden Abdeckungsbereich befindet;
- eine Zugangsvorrichtung (110), die eingerichtet ist, den Zugang zu einem Kommunikationsnetz gemäß dem Internetprotokoll (112) zu ermöglichen, und mit der die Bluetooth-Knoten (108) der genannten Bluetooth-Lokalisierungsinfrastruktur über ein lokales Kommunikationsnetz (LAN) verbunden sind;
wobei jeder Bluetooth-Knoten (108), wenn er die Anforderungsnachricht empfängt, eingerichtet ist, die Anforderungsnachricht an die genannte Zugangsvorrichtung (110) über das genannte lokale Kommunikationsnetz (LAN) weiterzuleiten;
wobei die genannte Zugangsvorrichtung (110) eingerichtet ist, eine erweiterte Anforderungsnachricht gemäß dem Internetprotokoll zu erzeugen, die einen ersten Datenabschnitt, der die in der empfangenen Anforderungsnachricht enthaltene Internetprotokolladresse des Empfängergeräts angibt, einen zweiten Datenabschnitt, der die in der empfangenen Anforderungsnachricht enthaltene Bluetooth-Adresskennung des Benutzergeräts angibt, und einen dritten Datenabschnitt, der die Position des Benutzergeräts (102) in Bezug auf die Bluetooth-Lokalisierungsinfrastruktur angibt, enthält;
wobei die genannte Zugangsvorrichtung (110) eingerichtet ist, über das genannte Kommunikationsnetz gemäß dem Internetprotokoll die erweiterte Anforderungsnachricht an das Empfängergerät zu übertragen.

2. Kommunikationssystem (100) nach Anspruch 1, wobei die genannte Zugangsvorrichtung (110) ein Mittel zur Positionsbestimmung des Benutzergeräts (102) enthält, das eingerichtet ist, zu bestimmen, dass die Position des Benutzergeräts (102) in Bezug auf die Bluetooth-Lokalisierungsinfrastruktur der vorbestimmten Position des Bluetooth-Knotens in der begrenzten Umgebung entspricht, von dem die Anforderungsnachricht gemäß dem Bluetooth-Protokoll übertragen wurde.

3. Kommunikationssystem (100) nach Anspruch 1 oder 2, wobei, wenn das genannte Mittel zur Positionsbestimmung des Benutzergeräts eine Vielzahl von Anforderungsnachrichten empfängt, deren erste Datenabschnitte und zweite Datenabschnitte identisch sind, das Mittel zur Positionsbestimmung des Benutzergeräts eingerichtet ist, zu bestimmen, dass die Position des Benutzergeräts in Bezug auf die Bluetooth-Lokalisierungsinfrastruktur der vorbestimmten Position des Bluetooth-Knotens in der begrenzten Umgebung entspricht, der diese Anforderungsnachricht gemäß dem Bluetooth-Protokoll zuerst übertragen hat.

4. Kommunikationssystem (100) nach einem der vorhergehenden Ansprüche, wobei die genannte Zugangsvorrichtung (110) eine assoziative Tabelle enthält, in der die Zuordnung zwischen der Bluetooth-Adresskennung des Benutzergeräts und dem zweiten Datenabschnitt der erweiterten Anforderungsnachricht gemäß dem Internetprotokoll, der die Bluetooth-Adresskennung des Benutzergeräts angibt, verzeichnet ist.

5. Kommunikationssystem (100) nach Anspruch 4, wobei der genannte zweite Datenabschnitt der erweiterten Anforderungsnachricht gemäß dem Internetprotokoll, der die Bluetooth-Adresskennung des Benutzergeräts angibt, eine zugewiesene IP-Adresse ist oder enthält, die der Bluetooth-Adresskennung des Benutzergeräts zugeordnet ist.

6. Kommunikationssystem (100) nach Anspruch 5, wobei die genannte zugewiesene IP-Adresse, die der Bluetooth-Adresskennung des Benutzergeräts zugeordnet ist, von der Bluetooth-Lokalisierungsinfrastruktur zugewiesen wird.

7. Kommunikationssystem (100), für eine Kommunikation von einem Empfängergerät (106), das einem Kommunikationsnetz gemäß einem Internetprotokoll (112) zugewandt ist, zu einem Benutzergerät (102), das einem eine in einer begrenzten Umgebung (A) angeordnete Bluetooth-Lokalisierungsinfrastruktur enthaltenden Kommunikationsnetz gemäß einem Bluetooth-Protokoll (104) zugewandt ist, umfassend:
- eine Zugangsvorrichtung (110), die eingerichtet ist, den Zugang zu dem Kommunikationsnetz gemäß dem Internetprotokoll zu ermöglichen, und mit der eine Vielzahl von Bluetooth-Knoten (108) der genannten Bluetooth-Lokalisierungsinfrastruktur über ein lokales Kommunikationsnetz (LAN) verbunden ist, wobei die Bluetooth-Knoten (108) der genannten Vielzahl von Bluetooth-Knoten eingerichtet sind, an jeweiligen Positionen der begrenzten Umgebung installiert zu werden;
wobei jeder der Bluetooth-Knoten seinen eigenen Abdeckungsbereich der begrenzten Umgebung aufweist;
wobei die genannte Zugangsvorrichtung (110) eingerichtet ist, von dem Empfängergerät über ein Kommunikationsnetz gemäß dem Internetprotokoll eine Antwortnachricht gemäß dem Internetprotokoll zu empfangen, die einen ersten Datenabschnitt, der eine Internetprotokolladresse des Empfängergeräts angibt, und einen zweiten Datenabschnitt, der eine Bluetooth-Adresskennung des Benutzergeräts angibt, enthält;
wobei die genannte Zugangsvorrichtung (110) eingerichtet ist, eine erweiterte Antwortnachricht gemäß dem Bluetooth-Protokoll zu erzeugen, die einen ersten Datenabschnitt, der die in der empfangenen Antwortnachricht enthaltene Internetprotokolladresse des Empfängergeräts angibt, einen zweiten Datenabschnitt, der die in der empfangenen Antwortnachricht angegebene Bluetooth-Adresskennung des Benutzergeräts enthält, und einen dritten Datenabschnitt, der die Position des Benutzergeräts in Bezug auf die Bluetooth-Lokalisierungsinfrastruktur angibt, enthält;
wobei die genannte Zugangsvorrichtung (110) oder ein überwachender Bluetooth-Knoten der genannten Bluetooth-Lokalisierungsinfrastruktur eingerichtet ist, den dem Benutzergerät (102) nächstgelegenen Bluetooth-Knoten der Bluetooth-Lokalisierungsinfrastruktur zu bestimmen;
wobei die genannte Zugangsvorrichtung (110) eingerichtet ist, über das genannte lokale Kommunikationsnetz (LAN) die erweiterte Antwortnachricht an den dem Benutzergerät nächstgelegenen Bluetooth-Knoten der Bluetooth-Lokalisierungsinfrastruktur zu übertragen;
wobei der Bluetooth-Knoten, der die erweiterte Antwortnachricht empfängt, eingerichtet ist, die genannte erweiterte Antwortnachricht an das Benutzergerät (102) innerhalb seines Abdeckungsbereichs weiterzuleiten.

8. Kommunikationssystem (100), für eine Kommunikation von einem Empfängergerät (106), das einem Kommunikationsnetz gemäß einem Internetprotokoll (112) zugewandt ist, zu einem Benutzergerät (102), das einem eine in einer begrenzten Umgebung angeordnete Bluetooth-Lokalisierungsinfrastruktur enthaltenden Kommunikationsnetz gemäß einem Bluetooth-Protokoll (104) zugewandt ist, umfassend:
- eine Zugangsvorrichtung (110), die eingerichtet ist, den Zugang zu dem Kommunikationsnetz gemäß dem Internetprotokoll (112) zu ermöglichen, und mit der eine Vielzahl von Bluetooth-Knoten (108) der genannten Bluetooth-Lokalisierungsinfrastruktur über ein lokales Kommunikationsnetz (LAN) verbunden ist, wobei die Bluetooth-Knoten (108) der genannten Vielzahl von Bluetooth-Knoten eingerichtet sind, an jeweiligen Positionen der begrenzten Umgebung (A) installiert zu werden;
wobei jeder der Bluetooth-Knoten (108) seinen eigenen Abdeckungsbereich der begrenzten Umgebung aufweist;
wobei die genannte Zugangsvorrichtung (110) eingerichtet ist, von dem Empfängergerät (106) über das genannte Kommunikationsnetz gemäß dem Internetprotokoll (112) eine Antwortnachricht gemäß dem Internetprotokoll zu empfangen, die einen ersten Datenabschnitt, der eine Internetprotokolladresse des Empfängergeräts angibt, und einen zweiten Datenabschnitt, der eine Bluetooth-Adresskennung des Benutzergeräts angibt, enthält;
wobei die genannte Zugangsvorrichtung (110) eingerichtet ist, eine erweiterte Antwortnachricht gemäß dem Bluetooth-Protokoll zu erzeugen, die einen ersten Datenabschnitt, der die in der empfangenen Antwortnachricht enthaltene Internetprotokolladresse des Empfängergeräts angibt, einen zweiten Datenabschnitt, der die in der empfangenen Antwortnachricht angegebene Bluetooth-Adresskennung des Benutzergeräts enthält, und einen dritten Datenabschnitt, der die Position des Benutzergeräts in Bezug auf die Bluetooth-Lokalisierungsinfrastruktur angibt, enthält;
wobei die genannte Zugangsvorrichtung (110) eingerichtet ist, über das genannte lokale Kommunikationsnetz (LAN) die erweiterte Antwortnachricht an die Vielzahl von Bluetooth-Knoten (108) der Bluetooth-Lokalisierungsinfrastruktur zu übertragen;
wobei jeder Bluetooth-Knoten (108) eingerichtet ist, die durch den dritten Datenabschnitt der erweiterten Antwortnachricht angegebene Position des Benutzergeräts (102) in Bezug auf die Bluetooth-Lokalisierungsinfrastruktur mit seiner vorbestimmten Position in der Bluetooth-Lokalisierungsinfrastruktur zu vergleichen; wenn ein Bluetooth-Knoten bestimmt, dass seine vorbestimmte Position in der Lokalisierungsinfrastruktur der durch den dritten Datenabschnitt der erweiterten Antwortnachricht angegebenen Position des Benutzergeräts in Bezug auf die Bluetooth-Lokalisierungsinfrastruktur entspricht, ist der genannte Bluetooth-Knoten eingerichtet, die genannte erweiterte Antwortnachricht an das Benutzergerät (102) innerhalb seines Abdeckungsbereichs weiterzuleiten.

9. Kommunikationssystem (100) nach Anspruch 8, wobei in dem genannten Benutzergerät (102) eine Softwareanwendung oder Bibliothek installiert ist, die eingerichtet ist, die Bluetooth-Adresskennung des Benutzergeräts, die durch den zweiten Datenabschnitt angegeben wird, der die in der empfangenen erweiterten Antwortnachricht enthaltene Bluetooth-Adresskennung des Benutzergeräts angibt, mit der Bluetooth-Adresskennung des Benutzergeräts zu vergleichen;
wenn der Vergleich zeigt, dass die Bluetooth-Adresskennung des Benutzergeräts nicht der Bluetooth-Adresskennung des Benutzergeräts entspricht, die durch den zweiten Datenabschnitt angegeben wird, der die in der empfangenen erweiterten Antwortnachricht enthaltene Bluetooth-Adresskennung des Benutzergeräts angibt, ist die genannte Softwareanwendung eingerichtet, die empfangene erweiterte Antwortnachricht zu verwerfen.

10. Kommunikationssystem (100) nach einem der Ansprüche 7 bis 9, wobei die genannte Zugangsvorrichtung (110) eine assoziative Tabelle enthält, in der die Zuordnung zwischen der Bluetooth-Adresskennung des Benutzergeräts und dem zweiten Datenabschnitt der Antwortnachricht gemäß einem Internetprotokoll, der eine Bluetooth-Adresskennung des Benutzergeräts angibt, verzeichnet ist.

11. Kommunikationssystem (100) nach Anspruch 10, wobei der genannte zweite Datenabschnitt der Antwortnachricht gemäß dem Internetprotokoll, der die Bluetooth-Adresskennung des Benutzergeräts angibt, eine zugewiesene IP-Adresse ist oder enthält, die der Bluetooth-Adresskennung des Benutzergeräts zugeordnet ist.

12. Kommunikationssystem (100) nach Anspruch 11, wobei die genannte zugewiesene IP-Adresse, die der Bluetooth-Adresskennung des Benutzergeräts zugeordnet ist, von der Bluetooth-Lokalisierungsinfrastruktur zugewiesen wird.

13. Kommunikationssystem (100) nach einem der vorhergehenden Ansprüche, wobei jeder Bluetooth-Knoten einen Bluetooth-Beacon enthält.

14. Kommunikationssystem (100) nach einem der vorhergehenden Ansprüche, wobei die genannte Zugangsvorrichtung (110) ein Netzwerk-Switch ist.

15. Kommunikationssystem (100) nach einem der vorhergehenden Ansprüche, wobei die genannte Zugangsvorrichtung (110) mit dem genannten Kommunikationsnetz gemäß dem Internetprotokoll (112) mittels eines Routers verbunden ist.

## Revendications

1. Système de communication (100), pour une communication depuis un dispositif utilisateur (102) faisant face à un réseau de communication selon un protocole Bluetooth (104) comprenant une infrastructure de localisation Bluetooth agencée dans un environnement confiné (A) vers un dispositif destinataire (106) faisant face à un réseau de communication selon un protocole Internet (108), comprenant :
- une application logicielle ou une bibliothèque agencée pour être installée dans le dispositif utilisateur (102) ayant un identifiant d'adresse Bluetooth du dispositif utilisateur et configurée pour générer un message de requête selon le protocole Bluetooth comprenant au moins une première portion de données indicative d'une adresse de protocole Internet du dispositif destinataire et une seconde portion de données comprenant l'identifiant d'adresse Bluetooth du dispositif utilisateur ;
- une pluralité de nœuds Bluetooth (108) appartenant à l'infrastructure de localisation Bluetooth et agencés pour être installés à des positions respectives de l'environnement confiné (A), chacun des nœuds Bluetooth (108) ayant sa propre zone de couverture de l'environnement confiné ; dans lequel chaque nœud Bluetooth (108) est agencé pour recevoir le message de requête transmis par ledit dispositif utilisateur (102) lorsqu'il se trouve dans la zone de couverture concernée ;
- un appareil d'accès (110) agencé pour permettre l'accès à un réseau de communication selon le protocole Internet (112) et auquel les nœuds Bluetooth (108) de ladite infrastructure de localisation Bluetooth sont connectés via un réseau de communication local (LAN) ;
dans lequel chaque nœud Bluetooth (108), lorsqu'il reçoit le message de requête, est agencé pour transférer le message de requête audit appareil d'accès (110) par l'intermédiaire dudit réseau de communication local (LAN) ;
ledit appareil d'accès (110) étant agencé pour générer un message de requête avancé selon le protocole Internet comprenant une première portion de données indicative de l'adresse de protocole Internet du dispositif destinataire comprise dans le message de requête reçu, une seconde portion de données indicative de l'identifiant d'adresse Bluetooth du dispositif utilisateur compris dans le message de requête reçu, et une troisième portion de données indicative de la position du dispositif utilisateur (102) par rapport à l'infrastructure de localisation Bluetooth ;
ledit appareil d'accès (110) étant agencé pour transmettre, par l'intermédiaire dudit réseau de communication selon le protocole Internet, le message de requête avancé au dispositif destinataire.

2. Système de communication (100) selon la revendication 1, dans lequel ledit appareil d'accès (110) comprend un moyen de détermination de la position du dispositif utilisateur (102) agencé pour déterminer que la position du dispositif utilisateur (102) par rapport à l'infrastructure de localisation Bluetooth correspond à la position prédéterminée dans l'environnement confiné du nœud Bluetooth à partir duquel le message de requête selon le protocole Bluetooth a été transmis.

3. Système de communication (100) selon la revendication 1 ou 2, dans lequel lorsque ledit moyen de détermination de la position du dispositif utilisateur reçoit une pluralité de messages de requête dont les premières portions de données et les secondes portions de données sont identiques, le moyen de détermination de la position du dispositif utilisateur est agencé pour déterminer que la position du dispositif utilisateur par rapport à l'infrastructure de localisation Bluetooth correspond à la position prédéterminée dans l'environnement confiné du nœud Bluetooth qui a transmis en premier ce message de requête selon le protocole Bluetooth.

4. Système de communication (100) selon l'une quelconque des revendications précédentes, dans lequel ledit appareil d'accès (110) comprend une table associative dans laquelle l'association entre l'identifiant d'adresse Bluetooth du dispositif utilisateur et la seconde portion de données du message de requête avancé selon le protocole Internet, indicative de l'identifiant d'adresse Bluetooth du dispositif utilisateur, est rapportée.

5. Système de communication (100) selon la revendication 4, dans lequel ladite seconde portion de données du message de requête avancé selon le protocole Internet, indicative de l'identifiant d'adresse Bluetooth du dispositif utilisateur, est ou comprend une adresse IP attribuée associée à l'identifiant d'adresse Bluetooth du dispositif utilisateur.

6. Système de communication (100) selon la revendication 5, dans lequel ladite adresse IP attribuée associée à l'identifiant d'adresse Bluetooth du dispositif utilisateur est attribuée par l'infrastructure de localisation Bluetooth.

7. Système de communication (100), pour une communication depuis un dispositif destinataire (106) faisant face à un réseau de communication selon un protocole Internet (112) vers un dispositif utilisateur (102) faisant face à un réseau de communication selon un protocole Bluetooth (104) comprenant une infrastructure de localisation Bluetooth agencée dans un environnement confiné (A), comprenant :
- un appareil d'accès (110) agencé pour permettre l'accès au réseau de communication selon le protocole Internet et auquel une pluralité de nœuds Bluetooth (108) de ladite infrastructure de localisation Bluetooth sont connectés via un réseau de communication local (LAN), dans lequel les nœuds Bluetooth (108) de ladite pluralité de nœuds Bluetooth sont agencés pour être installés à des positions respectives de l'environnement confiné ;
chacun des nœuds Bluetooth ayant sa propre zone de couverture de l'environnement confiné ;
ledit appareil d'accès (110) étant agencé pour recevoir du dispositif destinataire, par l'intermédiaire d'un réseau de communication selon le protocole Internet, un message de réponse selon le protocole Internet comprenant une première portion de données indicative d'une adresse de protocole Internet du dispositif destinataire et une seconde portion de données indicative d'un identifiant d'adresse Bluetooth du dispositif utilisateur ;
ledit appareil d'accès (110) étant agencé pour générer un message de réponse avancé selon le protocole Bluetooth comprenant une première portion de données indicative de l'adresse de protocole Internet du dispositif destinataire comprise dans le message de réponse reçu, une seconde portion de données comprenant l'identifiant d'adresse Bluetooth du dispositif utilisateur indiqué dans le message de réponse reçu, et une troisième portion de données indicative de la position du dispositif utilisateur par rapport à l'infrastructure de localisation Bluetooth ;
ledit appareil d'accès (110) ou un nœud Bluetooth superviseur de ladite infrastructure de localisation Bluetooth étant agencé pour déterminer le nœud Bluetooth de l'infrastructure de localisation Bluetooth le plus proche du dispositif utilisateur (102) ;
dans lequel ledit appareil d'accès (110) est agencé pour transmettre, par l'intermédiaire dudit réseau de communication local (LAN), le message de réponse avancé au nœud Bluetooth de l'infrastructure de localisation Bluetooth le plus proche du dispositif utilisateur ;
dans lequel le nœud Bluetooth qui reçoit le message de réponse avancé est agencé pour transférer ledit message de réponse avancé au dispositif utilisateur (102) dans sa zone de couverture.

8. Système de communication (100), pour une communication depuis un dispositif destinataire (106) faisant face à un réseau de communication selon un protocole Internet (112) vers un dispositif utilisateur (102) faisant face à un réseau de communication selon un protocole Bluetooth (104) comprenant une infrastructure de localisation Bluetooth agencée dans un environnement confiné, comprenant :
- un appareil d'accès (110) agencé pour permettre l'accès au réseau de communication selon le protocole Internet (112) et auquel une pluralité de nœuds Bluetooth (108) de ladite infrastructure de localisation Bluetooth sont connectés via un réseau de communication local (LAN), dans lequel les nœuds Bluetooth (108) de ladite pluralité de nœuds Bluetooth sont agencés pour être installés à des positions respectives de l'environnement confiné (A) ;
chacun des nœuds Bluetooth (108) ayant sa propre zone de couverture de l'environnement confiné ;
ledit appareil d'accès (110) étant agencé pour recevoir du dispositif destinataire (106), par l'intermédiaire dudit réseau de communication selon le protocole Internet (112), un message de réponse selon le protocole Internet comprenant une première portion de données indicative d'une adresse de protocole Internet du dispositif destinataire et une seconde portion de données indicative d'un identifiant d'adresse Bluetooth du dispositif utilisateur ;
ledit appareil d'accès (110) étant agencé pour générer un message de réponse avancé selon le protocole Bluetooth comprenant une première portion de données indicative de l'adresse de protocole Internet du dispositif destinataire comprise dans le message de réponse reçu, une seconde portion de données cmprenant l'identifiant d'adresse Bluetooth du dispositif utilisateur indiqué dans le message de réponse reçu, et une troisième portion de données indicative de la position du dispositif utilisateur par rapport à l'infrastructure de localisation Bluetooth ;
ledit appareil d'accès (110) étant agencé pour transmettre, par l'intermédiaire dudit réseau de communication local (LAN), le message de réponse avancé à la pluralité de nœuds Bluetooth (108) de l'infrastructure de localisation Bluetooth ;
dans lequel chaque nœud Bluetooth (108) est agencé pour comparer la position du dispositif utilisateur (102) par rapport à l'infrastructure de localisation Bluetooth indiquée par la troisième portion de données du message de réponse avancé avec sa position prédéterminée dans l'infrastructure de localisation Bluetooth ; lorsqu'un nœud Bluetooth détermine que sa position prédéterminée dans l'infrastructure de localisation correspond à la position du dispositif utilisateur par rapport à l'infrastructure de localisation Bluetooth indiquée par la troisième portion de données du message de réponse avancé, ledit nœud Bluetooth est agencé pour transférer ledit message de réponse avancé au dispositif utilisateur (102) dans sa zone de couverture.

9. Système de communication (100) selon la revendication 8, dans lequel dans ledit dispositif utilisateur (102) est installée une application logicielle ou une bibliothèque agencée pour comparer l'identifiant d'adresse Bluetooth du dispositif utilisateur indiqué par la seconde portion de données indicative de l'identifiant d'adresse Bluetooth du dispositif utilisateur compris dans le message de réponse avancé reçu avec l'identifiant d'adresse Bluetooth du dispositif utilisateur ;
lorsque la comparaison montre que l'identifiant d'adresse Bluetooth du dispositif utilisateur ne correspond pas à l'identifiant d'adresse Bluetooth du dispositif utilisateur indiqué par la seconde portion de données indicative de l'identifiant d'adresse Bluetooth du dispositif utilisateur compris dans le message de réponse avancé reçu, ladite application logicielle est agencée pour rejeter le message de réponse avancé reçu.

10. Système de communication (100) selon l'une quelconque des revendications 7 à 9, dans lequel ledit appareil d'accès (110) comprend une table associative dans laquelle l'association entre l'identifiant d'adresse Bluetooth du dispositif utilisateur et la seconde portion de données indicative d'un identifiant d'adresse Bluetooth du dispositif utilisateur du message de réponse selon un protocole Internet est rapportée.

11. Système de communication (100) selon la revendication 10, dans lequel ladite seconde portion de données du message de réponse selon le protocole Internet, indicative de l'identifiant d'adresse Bluetooth du dispositif utilisateur, est ou comprend une adresse IP attribuée associée à l'identifiant d'adresse Bluetooth du dispositif utilisateur.

12. Système de communication (100) selon la revendication 11, dans lequel ladite adresse IP attribuée associée à l'identifiant d'adresse Bluetooth du dispositif utilisateur est attribuée par l'infrastructure de localisation Bluetooth.

13. Système de communication (100) selon l'une quelconque des revendications précédentes, dans lequel chaque nœud Bluetooth comprend une balise Bluetooth.

14. Système de communication (100) selon l'une quelconque des revendications précédentes, dans lequel ledit appareil d'accès (110) est un commutateur de réseau.

15. Système de communication (100) selon l'une quelconque des revendications précédentes, dans lequel ledit appareil d'accès (110) est connecté audit réseau de communication selon le protocole Internet (112) au moyen d'un routeur.
